# EUROPÄISCHE PATENTSCHRIFT

(11) **EP 1 100 649 B1**
(45) Veröffentlichungstag und Bekanntmachung des Hinweises auf die Patenterteilung: **18.09.2002**
(21) Anmeldenummer: 99948674.9
(22) Anmeldetag: 24.07.1999
(51) Int. Cl.: B23Q 3/00

(54) **VERFAHREN UND VORRICHTUNG ZUR MECHANISCHEN BEARBEITUNG VON WERKSTÜCKEN UND ZUR MONTAGE/DEMONTAGE VON BAUGRUPPEN**
METHOD AND DEVICE FOR MECHANICALLY MACHINING WORK PIECES AND FOR ASSEMBLING/DISASSEMBLING MODULES
PROCEDE ET DISPOSITIF POUR L'USINAGE MECANIQUE DE PIECES ET POUR LE MONTAGE/DEMONTAGE DE MODULES

(30) Priorität: 07.08.1998 DE 19835740
(43) Veröffentlichungstag der Anmeldung: 23.05.2001
(73) Patentinhaber: W.I.T. Wiemers Innovate Technik GmbH, 39179 Barleben (DE)
(72) Erfinder: WIEMERS, Karl-Heinz, D-39179 Ebendorf (DE)
(74) Vertreter: Leinung, Günter
(86) Internationale Anmeldenummer: DE9902271
(87) Internationale Veröffentlichungsnummer: WO00007765

(56) Entgegenhaltungen:
- EP-A- 0 614 724
- EP-A- 0 796 700
- DE-A- 4 207 280
- DE-A- 19 646 096
- US-A- 4 630 942
- US-A- 4 798 985
- US-A- 5 239 892
- US-A- 5 524 502
- PATENT ABSTRACTS OF JAPAN vol. 18, no. 320 (E-1563), 17. Juni 1994 (1994-06-17) & JP 06 070534 A (YASKAWA ELECTRIC CORP), 11. März 1994 (1994-03-11)
- PATENT ABSTRACTS OF JAPAN vol. 1998, no. 10, 31. August 1998 (1998-08-31) & JP 10 141374 A (CANON INC), 26. Mai 1998 (1998-05-26)
- PATENT ABSTRACTS OF JAPAN vol. 17, no. 365 (M-1442), 9. Juli 1993 (1993-07-09) & JP 05 057550 A (MATSUSHITA ELECTRIC IND CO LTD), 9. März 1993 (1993-03-09)

## Beschreibung

Die Erfindung bezieht sich auf ein Verfahren und eine Vorrichtung zur mechanischen Bearbeitung von Werkstücken und zur Montage/Demontage von Baugruppen, bei der die mechanisch zu bearbeitenden Werkstücke als auch die zu montierenden oder die zu demontierenden Baugruppen auf eine verstell- und auswechselbare Aufspannplatte gespannt werden, welche in Werkzeugmaschinen, wie z. B. in CNC-gesteuerten Schleifmaschinen, Fräsmaschinen, Bohrwerken u. a., integriert ist oder in Transferstraßen zur Montage bzw. Demontage von Baugruppen Anwendung findet, wie z.B. in der DE-A-196 46 096 gezeigt.

Die Einbindung einzelner Werkzeugmaschinen oder auch Maschinensysteme in Fertigungs- oder auch Montage/Demontagestraßen wird in der Praxis angewendet, um die Nebenzeiten bei der mechanischen Bearbeitung und der Montage/Demontage zu senken und somit die Produktivität zu erhöhen sowie die Fertigungsmöglichkeiten zu erweitern.
Um diesen Forderungen zu entsprechen, sind bereits Lösungen vorgestellt worden, die solche Vorgänge wie das Spannen und Lösen von Werkstücken auf Werkstückaufspannplatten, das Positionieren von Werkstücken zu Bearbeitungswerkzeugen, die Verstellmöglichkeiten von zu bearbeitenden Werkstücken zu Bearbeitungszwecken und deren Verstellantriebe betreffen.
So bezieht sich die DE 21 02 234 A 1 auf einen Antrieb für die Bewegung von Werkzeugträgern innerhalb einer Fertigungsstraße, die auf einer Transportbahn in vorbestimmte Positionen verbracht werden.
Dies wird dadurch erreicht, daß als Kraftquellen mehrere wechselweise und durch Impulserregung zusammenwirkende Primär- und Sekundärteile in an sich bekannten Linearmotoren Anwendung finden. Die Primärteile sind in Abständen sowohl einzeln als auch gruppenweise auf der Transportbahn verteilt, die Sekundärteile sind am Werkzeugträger angeordnet.

Die in Gruppen angeordneten Primärteile liegen parallel oder winklig zueinander und bestimmte Primärteilgruppen sind durch vom Werkzeugträger betätigte Schalter in aufeinander folgendem Wechsel an ein Drehstrom- oder Gleichstromnetz angeschlossen.
Jedes der Sekundärteile besteht aus einer Platte mit hoher magnetischer Leitfähigkeit, welche dem Primärteil zugewandt, mit einer Platte hoher elektrischer Leitfähigkeit belegt ist und beide länger als jedes der wie sie gerichteten Primärteile sind.
In die Platte mit hoher elektrischer Leitfähigkeit sind quer zu ihr zwei parallele Streifen mit hoher magnetischer Leitfähigkeit eingebettet, von denen jeder breiter ist als die Breite der Nuten der Primärteile und deren gegenseitiger Mittenabstand der dem zweier ungleichnamiger Pole der Primärteile entspricht.
Bei dieser Lösung wird zwischen dem Werkzeugträger und der Transportbahn ein Luftpolster aufgebaut, und ein an sich bekannter Linearmotor wird als Antrieb verwendet.

Das Aufspannen oder Heben von Werkstücken mittels einer Magnetspannplatte ist durch die EP 0 357 904 A 1 bekannt, in der eine derartige Magnetspannplatte beschrieben wird, die nicht nur Werkstücke aus unterschiedlichem Material, sondern auch Werkstücke aus schwach- oder nichtmagnetischem Material sicher halten kann, deren Oberflächen so gestaltet sind, daß an keiner Stelle die Unterstützung des Werkstückes fehlt, aber nach wie vor eine sichere und gute Übertragung des Vakuums, durch den ungehinderten Luftdurchtritt, möglich ist.
Es werden dann zwei Ausführungsformen beschrieben. Bei der einen Ausführungsform sind die Schlitze oder Bohrungen in den magnetischen Polabschnitten zwischen den aus nichtferromagnetischem Material bestehenden Polleitungen ausgebildet und mit feinporigem Sintermetall gefüllt.
Bei der anderen Ausführung sind die Schlitze in den Polleitungen vorgesehen und ebenfalls mit feinporigem Sintermetall gefüllt, welches in diesem Fall nicht ferromagnetisch ist.
Mit dieser beschriebenen kombinierten Vakuum-Magnetspannplatte wird zwar ein Spannen mittels Magnetkräften erreicht, weitere Möglichkeiten, wie beispielsweise die Positionierung oder das Verfahren von einem auf einer Magnetspannplatte vorgesehenen Werkstück, sind mit dieser Lösung nicht durchführbar.

Ferner ist mit der DE 196 28 921 A 1 ein Werkzeugmaschinensystem zur mechanischen Bearbeitung bekannt geworden, bei dem das Werkzeugmaschinensystem aus einer Maschinenbasis mit einem in Wirkverbindung stehenden Maschinenportal besteht, welches seitlich auf dem Maschinenfundament abgestützt ist und die Maschinenbasis übergreift.
Die Maschinenbasis selbst ist so ausgestaltet, daß diese, zur Aufnahme und Führung einer Spanneinrichtung, ein Aufnahmebett besitzt, welches in der Längsachse der Maschinenbasis, also in der x-Achse verfahrbar ist.
Dem Aufnahmebett ist eine magnetisch stützbare, verspannbare und positionierbare Spanneinrichtung zugeordnet, mit der ermöglicht wird, daß die aufzunehmenden Werkstücke auf der Spannplatte verspannt werden, die gesamte Spanneinrichtung mit Hilfe von Magnetkräften angehoben, verfahren und positioniert sowie abgesetzt und mit dem Aufnahmebett magnetisch, vorzugsweise mittels Hybridmagneten, verspannt werden kann.

Ferner ist bekannt, die Spannplatte einer derart ausgebildeten Spanneinrichtung so auszugestalten, daß sie über entsprechende Hebe- und Verstelleinrichtungen, neben ihrer Verfahr- und Positionierbarkeit in den x- und y-Achsen, auch um ihre eigene Achse vertikal winklig verstellt und positioniert werden kann.
Bei diesen bekannten Lösungen wird die mit den entsprechenden Werkstücken versehene Spanneinrichtung über vorgesehene Hebemagnete in einen Schwebezustand verbracht, um dann in diesem verstellt, positioniert, abgesenkt und über vorgesehene Haltemagnete verspannt zu werden, damit in dieser aufgesetzten und verspannten Position der Spannplatte die entsprechenden Bearbeitungsschritte an den Werkstücken vorgenommen werden können.

Aufgabe der vorliegenden Erfindung ist es, ein Verfahren mit einer dazugehörenden Vorrichtung zu entwickeln, mit denen mechanische Bearbeitungen, Behandlungen u. ä. von Werkstücken sowie die Montage/Demontage von Baugruppen durchgeführt werden können, um die auf einer Aufspannplatte eines Maschinensystems vorhandenen Werkstücke/Baugruppen zu Werkzeugsystemen, Montageeinrichtungen, Behandlungssystemen u. ä. zu positionieren, die sich an einem oder mehreren Maschinenportalen befinden, die diese Aufspannplatte überspannen und/oder um diese herum angeordnet sind.

Erfindungsgemäß wird die Aufgabe durch die in den Ansprüchen 1, 6 und 12 herausgestellten Merkmale gelöst.

Die sich aus dem Ausführungsbeispiel ergebenden vorteilhaften Lösungen und besondere Ausgestaltungen sind Gegenstand der Unteransprüche.

Das vorgestellte Verfahren ist dadurch charakterisiert, daß mechanische Bearbeitungen, Behandlungen, Beschichtungen, Montagen-/Demontagen u. ä. an den sich auf einer Aufspannplatte eines Rundtisches oder einer Spanneinrichtung angeordneten Werkstücken und/oder Baugruppen, deren Positionierung und Verstellung zu Werkzeug-, Behand-lungs-, Montage- und Demontagesystemen im Schwebezustand des Rundtischträgers mit zugeordnetem Rundtisch und/oder des Rotors des Rundtisches sowie der gesamten Spanneinrichtung erfolgen, vorgenommen werden können, wobei durch vorgesehene Magnete und/oder ein unter Druck zugeführtes zusätzliches gasförmiges und/oder flüssiges Medienpolster der Schwebezustand des Rundtischrotors innerhalb des Gehäuses vom Rundtisch bzw. des Rundtischträgers mit dem darauf befindlichen Rundtisch bzw. der Spanneinrichtung aufgebaut bzw. unterstützt wird.

Die mechanischen Bearbeitungen, Behandlungen, Beschichtungen, Montagen/Demontagen und ähnliche an den Werkstücken und/oder Baugruppen können dabei konzentrisch, exzentrisch oder auf Bahnkurven erfolgen. Dies bedeutet, daß bei einem konzentrischen Bewegungsablauf die feste oder auswechselbare Aufspannplatte um ihre vertikale magnetgelagerte Rotationsachse rotiert, wobei die Aufspannplatte mit dem Rotor eines konzipierten Rundtisches verbunden ist und der Rotor innerhalb des Gehäuses vom Rundtisch magnetisch gelagert ist, wie auch der Rundtischträger in einer mechanischen Führungsstruktur.
Der Rotationsantrieb sowie die rotative Winkelpositionierung des Rotors kann dabei mechanisch oder auch mittels Synchron- oder Asynchronlinearmotoren bewirkt werden, wobei der rotatorische Kraftangriff sowohl in der horizontalen Ebene, z. B. von unten oder oben auf eine Flanschfläche oder eine abgesetzte Fläche des Rotors, als auch in der verikalen Ebene, z. B. an der Mantelfläche oder Innenbohrung des Rotors oder an dem äußeren Durchmesser des Rotorflansches, erfolgen kann.

Die vertikale und horizontale magnetische Verstellung erfolgt bei dem konzentrischen Bewegungsablauf der festen oder auswechselbaren Aufspannplatte nur zur Schweberegelung, d. h. zum µm-genauen Rundlauf des Rotors im Rundtisch und der Aufrechterhaltung der horizontalen sowie vertikalen Magnetspalte, so daß auch unter Einwirkung von statischen und dynamischen Kippmomenten, Bearbeitungskräften u. a. eine Berührung des Rotors mit der Innenseite des Rundtischgehäuses ausgeschlossen wird.

Beim konzentrischen Bewegungsablauf der festen oder auswechselbaren Aufspannplatte kann die Unterstützung des Schwebezustandes des Rotors im Rundtischgehäuse durch die Anordnung gleichpolig wirkender Magnete zwischen der Unterseite des Rotors und der dieser gegenüberliegenden Grundfläche im Rundtischgehäuse erfolgen.

Durch den konzentrischen, selbstangetriebenen Bewegungsablauf der festen oder auswechselbaren Aufspannplatte können die auf der Aufspannplatte befestigten Werkstücke zu Maschinenwerkzeugsystemen, die in deren x-Achse (Längsachse) beweglich sind, sich an Portalen oder im Umfeld der Maschine befinden, höchstgenau durch die Rotationsbewegung der Aufspannplatte als ϕ-Winkel um die vertikale z-Achse des Rundtisches sowie auf der y-Achse in Kombination mit dem Rundtischträger auf der x-Achse positioniert werden, so daß diese mit oder ohne eigenen Antrieb versehenen Werkzeugsysteme bearbeitend auf die Werkstücke einwirken.

Wie bereits oben ausgeführt, kann die fest oder auswechselbar angeordnete Aufspannplatte mit einer Spanneinrichtung oder einem Rundtisch kombiniert werden. Auch hier können die auf der Aufspannplatte befindlichen Werkstücke durch die Spanneinrichtung oder den Rundtischrotor fixiert oder durch die rotierende Achse der Spanneinrichtung bzw. des Rundtischrotors bewegt werden. Ebenso ist es möglich, die Spanneinrichtung oder den Rundtischrotor mit der konzentrisch drehenden festen oder auswechselbaren Aufspannplatte auf einer mechanischen oder linearmotorischen x-Achse bzw. der x-Achse des Rundtischträgers konventionell oder magnetgelagert an statische Werkzeugsysteme der Werkzeugmaschine oder solcher im Umfeld der Maschine heranzufahren, um die jeweilig erforderliche Position durch die x- und Rotationsbewegung höchstgenau zu erreichen. Danach kann das statische oder bewegliche, mit eigenem Rotations- und/oder Vertikalantrieb versehene Werkzeugsystem auf die Werkstücke, welche sich auf der festen oder auswechselbaren Aufspannplatte der Spanneinrichtung bzw. des Rundtisches befinden, einwirken, während über die eigene x-, y-ϕ-Achse der Spanneinrichtung bzw. über die ϕ-y-Achse des Rundtischrotors und der x-Achse des Rundtischträgers die Werkstücke während der Bearbeitung verfahren werden. Eine Kombination der x-/y-ϕAchsbewegungen der Werkzeugsysteme mit den x-y-ϕ-Rotationsbewegungen der Spanneinrichtung oder des Rundtischrotors in Verbindung mit dem Rundtischträger sind ebenso möglich sowie zusätzlich die z-Achsenbewegung der Werkzeugsysteme und die allwinkligen Vertikalbewegungen der geschaffenen und beschriebenen Vorrichtung.

Ein weiterer alternativer Einsatz der beschriebenen Vorrichtung ergibt sich für die mechanische Bearbeitung von Werkstücken in einer Werkzeugmaschine durch die allwinklige vertikale Bewegung einer in der x-Achse beweglichen Aufspannplatte einer Werkzeugmaschine, auf der die Werkstücke aufgespannt werden in Kombination mit dem Einsatz der beschriebenen Spanneinrichtung bzw. des Rundtisches als Werkzeugsystemträger am Portal der Werkzeugmaschine, in dem mehrere Werkzeugsysteme konzentrisch oder in Bahnbewegungen, wie bereits beschrieben, bewegt werden und auf die Werkstücke auf der vorgenannten Aufspannplatte einwirken.
Die Verstellung und Positionierung der Spanneinrichtung oder des Rundtisches sowie des Rundtischträgers mit der Aufspannplatte erfolgt für exzentrische Bewegungsabläufe an den Werkstücken auf der x-Achse des Systems. Daraus entstehen Bahnkurven, die sich als kombinierte Rotations- und Planarverschiebungen darstellen und über magnetische Hub-, Antriebs- und Verspannkräfte sowie mittels eines zusätzlichen gasförmigen und/oder flüssigen Mediums erfolgen. Dabei ist es möglich, nach jeder Positionierung der Werkstücke/ Baugruppen zu den genannten Systemen und Einrichtungen, mittels Verspannmagneten die Basisplatte der Spanneinrichtung mit dem Magnethaltering, der die Spanneinrichtung umfaßt bzw. den Rundtischrotor mit der Rundtisch-Gehäusegrundplatte zu verspannen und damit auch die Aufspannplatte gegen Bewegungen, z. B. durch die auftretenden Bearbeitungskräfte, zu sichern und das zusätzliche Medium zurückzuverdrängen. Ebenso ist es möglich, diese Aufspannplatte auf dem Magnetspalt zwischen der Basisplatte der Spanneinrichtung und der inneren Grundfläche des Magnethalteringes bzw. zwischen dem Rundtischrotor und der Rundtisch-Gehäusegrundplatte mit einem stützenden, den Magnetspalt versteifenden, gasförmigen und/oder flüssigen Medium während der Bearbeitung, Montage, Behandlung o. ä. in horizontalen und vertikalen Bahnkurven zu führen, ohne daß zwischenzeitlich eine Verspannung der Basisplatte mit dem Magnethaltering erfolgen muß. Dabei werden alle Bewegungen der Spanneinrichtung sowie der Aufspannplatte durch ein integriertes CNC-System gesteuert.

Die notwendige Berührungsfreiheit der zur Spanneinrichtung gehörenden Basisplatte im Magnethaltering im angehobenen Zustand der Spanneinrichtung bzw. des Rundtischrotors im Rundtischgehäuse und des Rundtischträgers in seiner mechanischen Führungsstruktur wird über ein Sensorsystem überwacht und gesichert, und ein vorgesehenes Meßsystem garantiert die µm-genaue Positionierung der ebenso zur Spanneinrichtung bzw. zum Rundtisch gehörenden auswechselbar gestalteten Aufspannplatte.
Das Verfahren ist dabei so konzipiert, daß die notwendigen Verfahrensschritte sowohl einzeln als auch in Kombination miteinander ablaufen können. Das bedeutet, die einzelnen vertikalen Positionen der zur Spanneinrichtung gehörenden Basisplatte bzw. zum Rundtisch gehörenden Rotors können sowohl mittels Magnetkräften, durch zugeführte Medien, vorzugsweise Luft, oder auch in der Kombination von Magnetkräften und/oder flüssigen und/oder gasförmigen Medien erzielt werden. Dies bedeutet ferner, daß sowohl im Zustand der Schwebe, in dem die Spanneinrichtung bzw. der Rotor des Rundtisches allseitig positioniert und/oder geführt wird, als auch in deren abgesetzten, mit dem Magnethaltering bzw. der Rundtisch-Gehäusegrundplatte und/oder des Rundtischträgers in seiner mechanischen Führungsstruktur verspannten Position, die entsprechenden Bearbeitungen, Behandlungen, Montagen/Demontagen u. ä. an den Werkstücken/ Baugruppen auf der Aufspannplatte durchgeführt werden können.

Ferner kann die Spanneinrichtung bzw. der Rundtischträger mit dem Rundtisch für Montage- und Demontagezwecke Bestandteil des jeweiligen Maschinensystems sein und ist zu diesem Zweck beispielsweise in einer dafür konzipierten Fundamentgrube bzw. in einer Transferstraße angeordnet.
Die gesamte Spanneinrichtung bzw. der Rundtischträger mit dem Rundtisch, so also auch die auf der Aufspannplatte befestigten Werkstücke/Baugruppen, können von mit Werkzeugen, Behandlungs-, Montage-/ Demontagesystemen versehenen Maschinenportalen in der x-Achse überfahren werden.

Die magnetisch stützbare, verspannbare, und postionierbare Spanneinrichtung bzw. der Rotor des Rundtisches mit den auf deren Aufspannplatte aufgesetzten Werkstücken/Baugruppen wird mit Hilfe von Magnetkräften und/oder gasförmigen und/oder flüssigen Medien angehoben, verfahren sowie positioniert und abgesenkt. Die Spanneinrichtung bzw. der Rotor des Rundtisches wird magnetisch, vorzugsweise mittels Hybridmagneten, verspannt, wobei die Spanneinrichtung selbst in einem die Basisplatte der Spanneinrichtung umfassenden Magnethaltering bzw. der Rotor des Rundtisches im Rundtischgehäuse angeordnet ist. In diesem befinden sich Hebe-, Spann- und Antriebsmagnete, im Rundtischgehäuse zusätzliche Zentriermagnete. Die vorgesehenen Antriebsmagnete, vorzugsweise Linearmotore, gewährleisten, daß die im schwebenden Zustand der Spanneinrichtung bzw. des Rundtisches und/oder dessen Träger auf deren Aufspannplatte aufgesetzten Werkstücke/Baugruppen verfahren und zu den entsprechenden Werkzeug-, Behandlungs-, Montage-/ Demontagesystemen u. ä. positioniert werden können.

Der Freiraum zwischen dem Magnethaltering und der Basisplatte der Spanneinrichtung, als auch der Freiraum zwischen dem Magnethaltering und dem Tragring der Spanneinrichtung ist so gewählt, daß die gesamte Spanneinrichtung rotativ sowie planar, das heißt um ihre z-Achse und in den x- und y-Richtungen verfahren und positioniert werden kann, je nach der erforderlichen Position der Werkstücke zu den Werkzeug- und Behandlungssystemen bzw. den erforderlichen Positionen der Baugruppen zu den Montage/Demontagesystemen.
Bei konzentrischer Anordnung mittels Rundtisch mit Rundtischträger wird mit dem Rundtischrotor die rotative ϕ-Winkeleinstellung um die z-Achse und damit die relative y-Achse positioniert, während die Positionierung auf der x-Achse mittels des Rundtischträgers erfolgt.

Die erfindungsgemäße Vorrichtung besteht somit aus einer Spanneinrichtung mit einer Basisplatte, einem Tragring, einer Aufspannplatte sowie einem Magnethaltering, der die Basisplatte als Unterteil der Spanneinrichtung umgreift, mit der Spanneinrichtung selbst in Wirkverbindung steht und mit Hebe-, Spann- und Antriebsmagneten ausgerüstet ist.
In konzentrischer Anordnung aus einem Rundtischgehäuse mit einem Rotor, einer Aufspannplatte mit einem Rundtischträger, der mit dem Rundtisch selbst in Wirkverbindung steht d. h. dieser auf seiner x-Achse linear bewegt und mit Hebe-Halte-Führungs- und Antriebsmagneten ausgerüstet ist. Ebenso mit Hebe-Spann- und Antriebsmagneten sowie zusätzlichen Zentriermagneten ist der Rundtisch ausgerichtet, um mit dem Rundtischrotor in Kombination mit dem Rundtischträger die rotative ϕ-Winkelbewegung um die z-Achse bzw. die relative y-Bewegung bei jeweiliger exakter Haltung der vertikalen und horizontalen Systemachse der Gesamteinrichtung auszuführen.
Ferner sind Düsenöffnungen vorgesehen, durch die das gasförmige und/oder flüssige Medium eingeleitet oder abgeführt wird, um die Anhebung der gesamten Spanneinrichtung bzw. des Rundtischrotors oder deren/dessen Schwebezustand zu erreichen bzw. zu unterstützen. Im Falle der magnetischen Verspannung der Spanneinrichtung mit dem Magnethaltering bzw. des Rundtischrotors mit der Rundtisch-Gehäusegrundplatte wird das entsprechende Medium über die Düsenöffnungen in die innere Grundfläche des Magnethalteringes bzw. Rundtisch-Gehäusegrundplatte durch das Gewicht der Spanneirtrichtung und die magnetischen Verspannkräfte zurückverdrängt.
Das Verfahren und Positionieren der Spanneinrichtung bzw. des Rundtischrotors erfolgt im angehobenen, das heißt im Schwebezustand, da die vorhandenen Hebemagnete und/oder das Medium (Gas, Flüssigkeit, o. ä.), die Spanneinrichtung bzw. den Rundtischrotor derart von der Grundfläche des Magnethalteringes bzw. der Rundtisch-Gehäusegrundplatte abheben, daß zwischen der Basisplattenunterseite und der inneren Grundfläche des Magnethalteringes bzw. der Rundtischrotor-Unterseite und der Rundtisch-Gehäusegrundplatte sowie zwischen der Basisplattenoberseite und der inneren Oberseite des Magnethalteringes bzw. der Rundtischrotor-Oberseite und dem Rundtisch-Gehäusedeckel definierte Spalte entstehen und so die erforderlichen Verfahr- bzw. Positioniervorgänge der Aufspannplatte bei berührungsloser Basisplatte bzw. berührungslosem Rundtischrotor im Rundtischgehäuse erfolgen können.
Die Basisplatte der Spanneinrichtung kann sowohl vollflächig als auch ringförmig ausgebildet sein.

Mit nachfolgendem Ausführungsbeispiel soll die Erfindung näher erläutert werden.

Die dazugehörigen Zeichnungen zeigen in
- Figur 1:: die beispielhafte Gesamtansicht eines Werkzeugmaschinensystems mit Rundtisch und Rundtischträger
- Figur 2:: eine Gesamtaussicht eines Werkstückmaschinensystems mit einer Spanneinrichtung
- Figur 3:: eine Schnittdarstellung eines Rundtisches
- Figur 4:: eine Schnittdarstellung des Magnethalteringes mit der Spanneinrichtung und dessen Lagerung in einer Fundamentgrube
- Figur 5:: eine weitere Ausführungsform der Spanneinrichtung mit ringförmiger Basisplatte in Halb-Schnittdarstellung
- Figur 6:: eine Teilansicht nach Figur 5
- Figur 7:: eine Ansicht der prinzipiellen Anordnung z. B. der Halte- und Antriebsmagnete im Magnethaltering
- Figur 8:: die Anordnung des Rundtisches auf dem Rundtischträger in Schnitt-Darstellung.

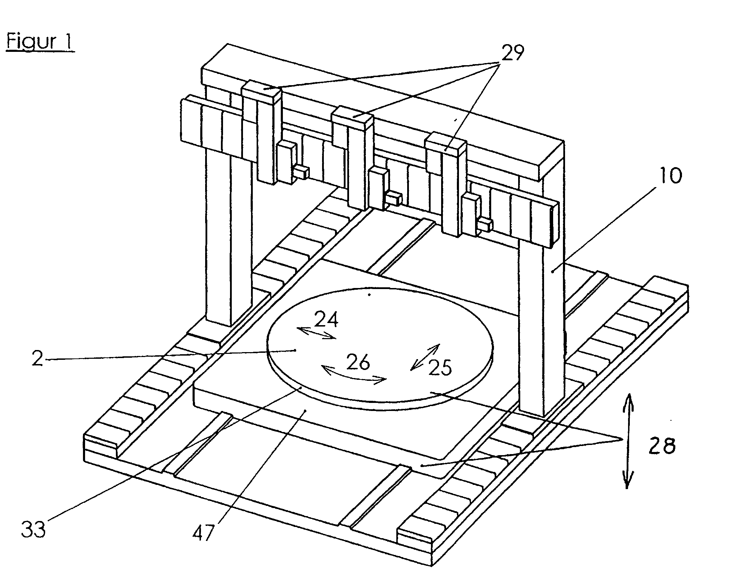

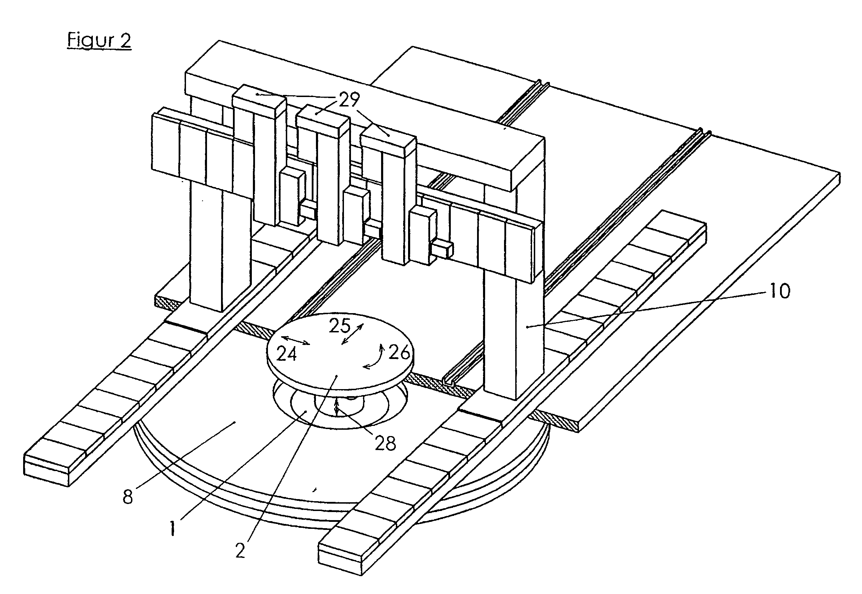

Die Einbindung und Anordnung eines Rundtisches 33 mit zugeordneter Aufspannplatte 2 und dem Rundtischträger 47 in ein komplettes Werkzeugmaschinensystem ist in der Figur 1 gezeigt, während die Einbindung und Anordnung einer Spanneinrichtung 1 mit zugeordneter Aufspannplatte 2 in der Figur 2 dargestellt ist. Ferner ergeben sich aus beiden Figuren, wie die Aufspannplatte 2, ob nun Bestandteil eines Rundtisches 33 mit Rundtischträger 47 oder einer Spanneinrichtung 1, in den einzelnen Bewegungsrichtungen 24, 25, 26, 28 verfahren werden kann.
Gleichzeitig ist dargestellt, wie ein Maschinenportal 10 diese Spanneinrichtung 1 bzw. den Rundtisch 33 übergreift und an den Maschinenportalen 10 vorgesehene Werkzeugsysteme, die in Halterungen 29 geführt werden, unmittelbar auf die auf der Aufspannplatte 2 angeordneten Werkstücke einwirken können.

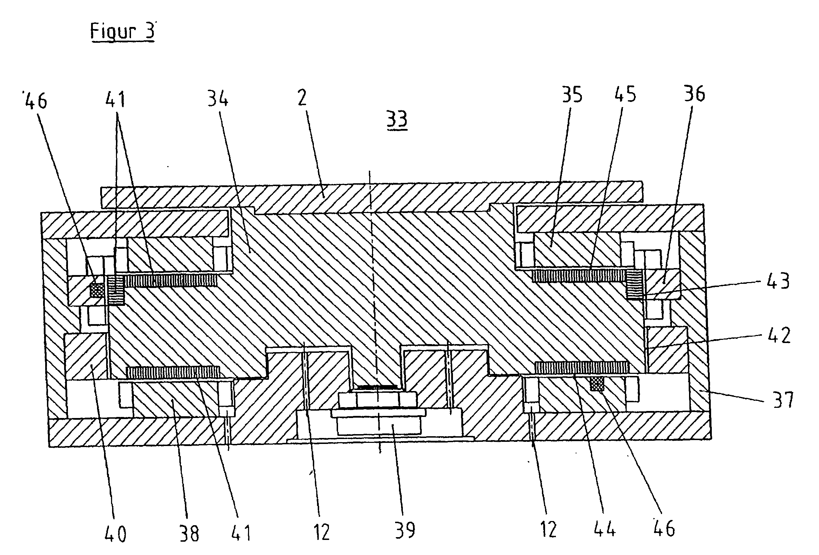

Der Aufbau und die Ausgestaltung eines erfindungsgemäßen Rundtisches 33 gibt die Darstellung nach Figur 3 wieder. Der Rundtisch 33 ist dabei als kompakte Baugruppe ausgebildet, welcher aus einem Gehäuse 37 besteht, in dem ein Rotor 34 eingeordnet ist. Die Aufspannplatte 2 kann dabei sowohl fest als auch auswechselbar mit dem Rotor 34 verbunden sein.
Zum Rundtisch 33 gehören ferner Hebemagnete 35 und Haltemagnete 38, wobei die Hebemagnete 35 oberhalb des Rotors 34 am Deckel des Gehäuse 37 befestigt sind, während die Haltemagnete 38 unterhalb vom Rotor 34 auf der Grundplatte des Gehäuses 37 angeordnet sind.
Ferner ist der Rundtisch 33 mit Zentriermagneten 36 und einem rotativ wirkenden Linearmotor 40 ausgerüstet, der umfänglich mit dem Rotor 34 in Wirkverbindung steht und an der Innenwandung des Gehäuses 37 angeordnet ist. Im Bereich der Hebemagnete 35, der Haltemagnete 38 und der Zentriermagnete 36 ist der Rotor 34 bevorzugterweise mit geblechten Zonen 41 ausgerüstet, um die magnetische Effizienz zu steigern, wobei selbstverständlich auch ein direkter Einfluß der Magnete 35, 36 und 38 auf den Rotor 34 möglich ist. Die Notwendigkeit der Blechung wird immer vom Material des Rotors 34 abhängig sein.

In den Wirkbereichen der Hebemagnete 35, der Haltemagnete 38 und der Zentriermagnete 36 zum Rotor 34 sind entsprechende Luftspalte 45, 44 und 43 vorhanden, die gleichzeitig Magnetspalte darstellen, auf denen der Rotor 34 positioniert, rotativ bewegt und in seiner horizontalen und vertikalen Position korrigiert werden kann.
Ferner befindet sich ein Luftspalt 42 zwischen dem Linearmotor 40 und dem Rotor 34, wobei der Rotor 34 als Sekundärteil des Linearmotors 40 im Wirkbereich des Linearmotors 40 mit Permanentmagneten ausgestattet ist.

Zum Rundtisch 33 gehört ferner eine Winkelmeßeinrichtung 39, die unmittelbar mit dem Rotor 34 in Wirkzusammenhang steht und so ausgebildet ist, daß damit eine exakte Winkeleinstellung und Messung des Drehwinkels ϕ der Aufspannplatte 2 möglich ist, gleichfalls direkt über diese Einrichtung kann die Drehzahl der Aufspannplatte 2 und indirekt deren Beschleunigung gemessen werden.
Um die flüssigen oder gasförmigen Medien in den Arbeitsbereich des Rotors 34 führen zu können, ist das Gehäuse 37 mit Öffnungen ausgeführt, in denen Düsen 12 Aufnahme finden, über die die vorgesehenen Medien zugeführt werden können.
Ferner ist der Rundtisch 33 mit Sensoren 46 ausgerüstet, die unmittelbar im Bereich, der Zentriermagnete 36 und der Haltemagnete 38 vorgesehen sind und zur Messung der Luftspalte 43 und 44 verwendet werden.
Schließlich ist innerhalb des Rundtisches 33 eine nicht näher dargestellte Fangeinrichtung für den Rotor 34 vorgesehen, die beispielsweise bei Stromausfällen wirksam wird, damit der Rotor 34 weder mit den Haltemagneten 38, den Zentriermagneten 36, noch mit dem Linearmotor 40 in Berührung kommt und es zu keinen Zerstörungen innerhalb des Rundtisches 33 kommen kann.

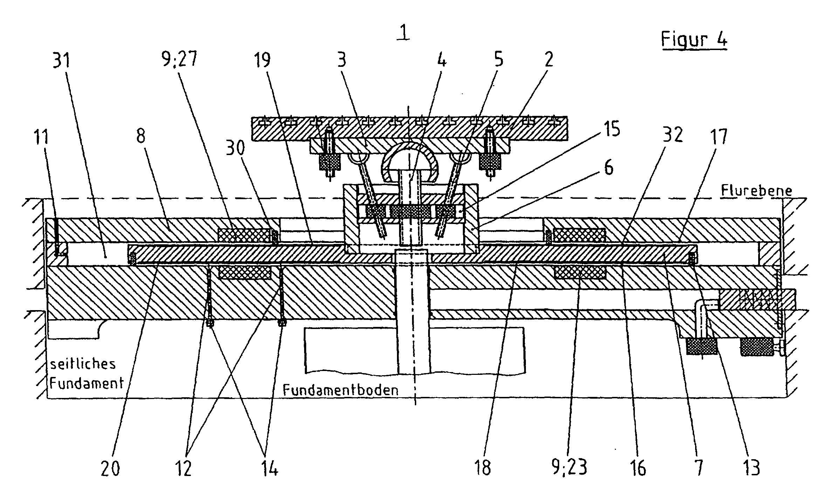

Der Aufbau der Spanneinrichtung 1 und ihre Lagerung im Magnethaltering 8 sowie deren Anordnung in einer speziellen Fundamentgrube ergibt sich aus der Darstellung nach der Figur 4.
Die Spanneinrichtung 1 besteht dabei aus einer Basisplatte 7, welche bei der dargestellten Ausführung als eine vollflächige Platte ausgebildet ist, auf der ein Tragring 6 befestigt ist, in dem wiederum die Winkelverstelleinrichtung 15 angeordnet ist.

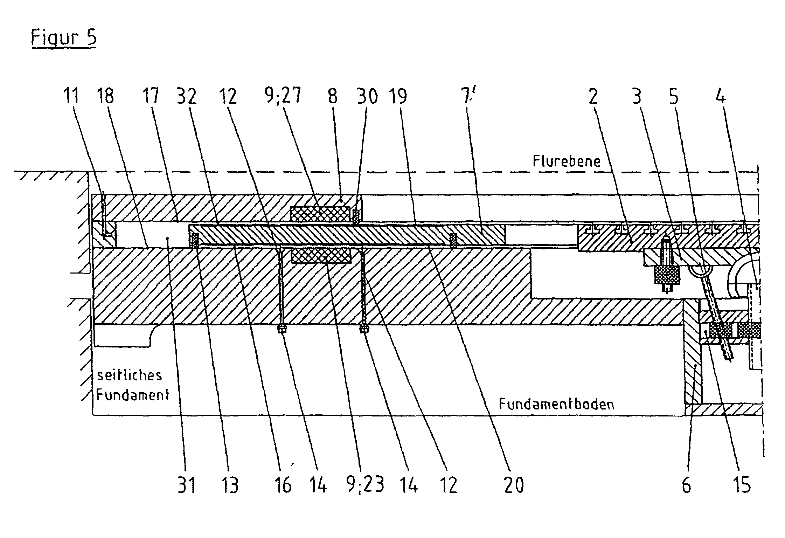

Über die Niveaueinstellspindeln 5 der Winkelverstelleinrichtung 15, die Kugelkopfstützenspindel 4, den Tragring 6 und die Basisplatte 7 bzw. die als Ring ausgebildete Basis- platte 7', in der Figur 5 dargestellt, ist die konstruktive Verbindung als auch die Wirkverbindung zur Aufspannplatte 2 hergestellt, wobei die auswechselbare Aufspannplatte 2 über entsprechende Befestigungselemente mit der Zentrierplatte 3 verbunden ist. Diese Verbindung gewährleistet, daß die Aufspannplatte 2, je nach technologischer Anforderung, aus der Spanneinrichtung 1 herausgenommen werden kann, um dann zu anderen Bearbeitungs- Behandlungs-, Montage-/ Demontagesystemen weitergeleitet oder außerhalb des gesamten Maschinensystems abgerüstet und wieder bestückt werden zu können.

Die Lagerung der Spanneinrichtung 1 erfolgt über die Basisplatte 7, welche in einem Magnethaltering 8 in der Art und Weise angeordnet ist, daß in dem ringförmig ausgebildeten Freiraum 31 des Magnethalteringes 8 die Basisplatte 7 eingesetzt ist und die Größenordnungen so gewählt sind, daß die Basisplatte 7 ungehindert in dem Magnethaltering 8 angehoben, verstellt und abgesenkt werden kann.

In der Grundfläche 18 sind Haltemagnete 23 und Antriebsmagnete 9 und in der inneren Oberfläche 17 des Magnethalteringes 8 sind Hebemagnete 27 und Antriebsmagnete 9 angeordnet, wobei in bevorzugter Weise die Halte- und Hebemagnete 23; 27 als Hybridmagnete ausgebildet sind, das heißt, diese bestehen in ihrem Aufbau aus einer Kombination von Elektro- und Permanentmagneten.
Die Antriebsmagnete 9 sind vorzugsweise als Linearmotore ausgebildet, mittels derer die Basisplatte 7 rotativ und planar verfahren werden kann, wobei ein nicht näher dargestelltes Sensorsystem die Berührungsfreiheit der Basisplatte 7 im Magnethaltering 8 sichert. Dies in der Art und Weise, daß sich zwischen der inneren Oberseite 17 des Magnethalteringes 8 und der Basisplattenoberseite 19 und zwischen der inneren Grundfläche 18 des Magnethalteringes 8 und der Basisplattenunterseite 20 Spalten 16; 32 ergeben.
Befindet sich die Basisplatte 7 in diesem angehobenen, also im Schwebezustand, ist eine Verstellung und Positionierung der gesamten Spanneinrichtung 1 möglich, wobei ein integriertes Meßsystem sicherstellt, daß eine µm-genaue Positionierung der Aufspannplatte 2 mit den sich darauf befindenden Werkstücken oder Baugruppen zu, in Halterungen 29 angeordneten Werkzeugsystemen erfolgt, wie beispielsweise in der Figur 2 dargestellt.

Die in der Figur 4 als auch in der Figur 5 gezeigte Anordnung der Basisplatte 7 bzw. der Basisplatte 7' im Magnethaltering 8 verdeutlicht im weitesten Sinne den Schwebezustand der gesamten Spanneinrichtung 1 und die Anordnung sowie das Zusammenspiel der einzelnen Elemente des gesamten Systems.
In der Praxis, während der Bearbeitungsvorgänge, liegt die gesamte Spanneinrichtung 1 entweder über ihren Basisplatten 7;7' auf der Grundfläche 18 des Magnethalteringes 8 auf oder schwebt zwischen der Oberseite 17 und der Grundfläche 18 des Magnethalteringes 8. Dieser Zustand wird dadurch erreicht, daß die Basisplatten 7; 7' entweder durch die Hebemagnete 27 und/oder durch die Einleitung eines Mediums (Gas, Flüssigkeit u. ä.) zwischen der Basisplattenunterseite 20 und der inneren Grundfläche 18 des Magnethalteringes 8 in diese Position verbracht wird.
Dabei kann die Erreichung des Schwebezustandes sowohl über die Kräfte der eingesetzten Magnete als auch über die Zuführung eines dieser Medien erreicht werden, aber auch durch die Kombination beider Tragsysteme. Die eingesetzten Hebe- und Haltemagnete 27; 23 - unterstützt durch ein Medium, das über mit Anschlüssen 14 ausgebildeten Düsen 12 von außerhalb zugeführt wird und in den Spalt 16 zwischen der Basisplattenunterseite 20 und der Grundfläche 18 des Magnethalteringes 8 unter Druck einströmt - heben die Basisplatten 7, 7' und dämpfen deren Vertikalbewegungen im schwebenden Zustand.
Dabei werden das Gewicht der gesamten Spanneinrichtung 1 mit den Werkstücken/Baugruppen auf der Aufspannplatte 2, die vertikalen Anteile der Bearbeitungskräfte sowie die vertikalen Kräfteanteile der Kippmomente aus den Horizontalverstellungen der Basisplatten 7; 7', von den Hebemagneten 27 und/oder dem Medienpolster im Spalt 16 aufgenommen.
Die vorgesehenen Dichtungen 13, vorzugsweise als vorgespannte Lippendichtungen ausgebildet, dichten den Spalt 16 ab, damit das zugeführte Medium unmittelbar in diesem Spalt 16 wirksam wird und nicht am Außendurchmesser der Basisplatten 7; 7' frei ausströmen kann.

Das geregelte Ein- und Ausströmen des zuzuführenden Mediums (Gas, Flüssigkeit o. ä.) in die Spalten 16; 32 zwischen den Basisplatten 7; 7'und dem Magnethaltering 8 kann auch über an seinem Umfang verteilte Düsen 11 in den Freiraum 31 erfolgen, wodurch sich gleiche Druckverhältnisse in den Spalten 16; 32 einstellen. Dabei verhindert die Dichtung 30, vorzugsweise als Lippendichtung ausgebildet, das freie Ausströmen des Mediums aus dem Spalt 32.
Bei dieser alternativen Gestaltung der Ab- und Zufuhr des Mediums (Gas und Flüssigkeit o. ä.) werden im Schwebezustand der Basisplatten 7,7' das Gewicht der gesamten Spanneinrichtung 1 mit den Werkstücken/Baugruppen auf der Aufspannplatte 2, die vertikalen Anteile der Bearbeitungskrätte sowie die vertikalen Krätteanteile der Kippmomente aus der Horizontalverstellung der Basisplatten 7;7' von den Hebemagneten 27 und/oder dem Medium in den Spalten 16 und 32 aufgenommen.
Somit liegen auch genügend Freiheitsgrade für die Basisplatten 7;7' im Magnethaltering 8 vor, die sichern, daß die gesamte Spanneinrichtung 1 entsprechend den jeweils erforderlichen technologischen Bedingungen verfahren und positioniert werden kann.

Die in Figur 5 gezeigte Ausführungsvariante der Spanneinheit 1 verdeutlicht die Ausbildung der Basisplatte 7' als Ring und deren Anordnung im Magnethaltering 8 und auch den Bezug zwischen der Basisplatte 7' und der Aufspannplatte 2.
Die Lagerung der Basisplatte 7' erfolgt in analoger Weise im Magnethaltering 8, wie vorher für die Basisplatte 7 beschrieben, wobei wesentlich ist, daß die Aufspannplatte 2 über die Kugelkopfstützenspindel 4 höhenmäßig auch zu der Basisplatte 7' verstellt werden kann.
Die Winkelverstelleinrichtung 15 bleibt in ihrem Aufbau unverändert und in Wirkverbindung mit der Aufspannplatte 2 und der Basisplatte 7', so daß unabhängig von der Winkelverstelleinrichtung 15 die vorher beschriebenen rotativen/planaren Verstellungen mit den Basisplatten 7, 7' ausgeführt werden können.
Die unmittelbare feste Anordnung der Winkelverstelleinrichtung 15 in der Spanneinrichtung 1 hat keinen Einfluß auf die Funktionsweise derselben, da ihre vorgesehenen einzelnen Elemente nach wie vor in der Lage sind, die Aufspannplatte 2 in den gewünschten vertikalen Positionen zu verstellen und auch zu arretieren.

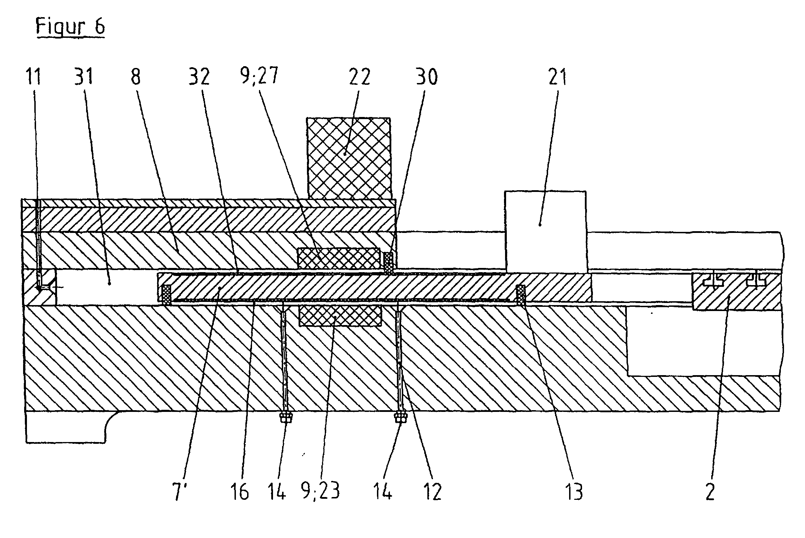

Die Ausbildung der Basisplatte 7' ist so gewählt, daß diese, wie in Figur 6 gezeigt, als Träger von verfahrbaren Werkzeugsystemen 21 in der y-Richtung 24, der x-Richtung 25 und rotationssymmetrisch in der Richtung 26 sowie in der Spalthöhe, der z-Richtung 28, verstellt werden kann.

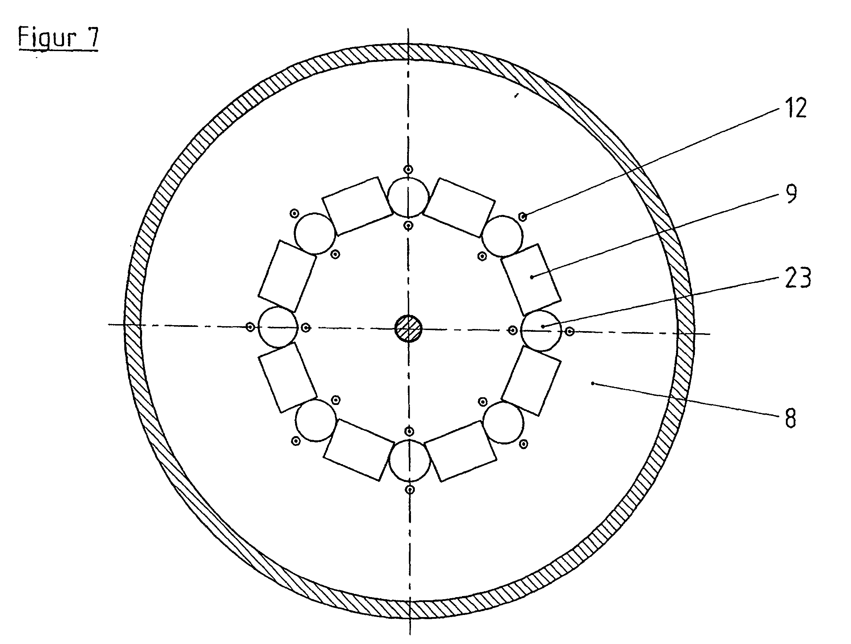

Eine Vorzugsvariante der Ausbildung und Anordnung der Antriebsmagnete 9 und der Haltemagnete 23 in der Grundfläche des Magnethalteringes 8 zeigt eine Ansicht in Form eines Schnittes durch den Magnethaltering 8, gemäß Figur 7, wobei die Anordnung der Haltemagnete 23 und die der Antriebsmagnete 9, der Linearmotore, auch durchaus anders vorgenommen werden kann.

Zum funktionellen Ablauf wird ausgeführt, daß durch die Variationsvielfältigkeit des gesamten Systems die zu bearbeitenden Werkstücke und/oder die zu montierenden/demontierenden Baugruppen, welche sich auf der Aufspannplatte 2 befinden, µm-genau zu den an den Maschinenportalen 10 und/oder fest konzentrisch um die Aufspannplatte 2, z. B. auf der Oberfläche des Magnethalteringes 8, angebrachten Werkzeug-, Behandlungs-, Montage-/Demontagesystemen vertikal positioniert werden können, was z. B. mit dem jeweiligen Werkstück zu jedem Werkzeugsystem je nach den technologischen Anforderungen unbeschränkt wiederholbar ist. So auch die Positionierung und Verstellung der auf der Basisplatte 7' montierten Werkzeug-, Behandlungs-, Montage-/Demontagesysteme 21 u. a. in deren rotativen und planaren Verstellung zu Werkstücken und/oder Baugruppen, welche sich auf der Aufspannplatte 2 befinden.

Zum Zeitpunkt der Werkstückbearbeitung befindet sich die Basisplatte 7' in ihrer abgesenkten Position, das heißt, sie liegt auf der inneren Grundfläche 18 des Magnethalteringes 8 auf und wird mittels der dort vorhandenen, dann aktivierten Haltemagnete 23 mit diesem verspannt, um Bewegungen der Werkstücke während deren Bearbeitung zu vermeiden, oder sie befindet sich durch die aktivierten Hebemagnete 27 und/oder einem Medium (Gas, Flüssigkeit u. ä.), welches über die entsprechenden Düsenöffnungen 11;12 in die Spalten 16;32 gedrückt wird, im Schwebezustand und wird mittels der auf die Basisplatte 7' einwirkenden Antriebsmagnete 9, entsprechend den technologischen Anforderungen für die Bearbeitung der Werkstücke, auf einer durch rotative und planare kombinierte Verschiebung erzeugte Bahnkurve, µm-genau verfahren und/oder positioniert.

Die Vertikalbewegungen des Basisplatte 7', welche durch Gravitation, Kippmomente und Bearbeitungskräfte entstehen, werden entsprechend durch die Hebemagnete 27 geregelt und/oder durch das unter Druck stehende Medium aufgenommen, wobei die definierten Abstände zwischen der Basisplatte 7' und der Oberseite 17 sowie der Grundfläche 18 des Magnethalteringes 8 über ein Sensor-/Regelsystem kontrolliert und geregelt werden, so daß eine Berührung der Basisplatte 7'mit dem Magnethaltering 8 vermieden wird. Auch das jeweils eingesetzte Medium wird entsprechend geregelt, z. B. in die Spalten 16,32 eingeleitet oder verdrängt.

Eine rotative und/oder planare Verfahrung der Basisplatte 7' im schwebenden Zustand wird durch die Hebemagnete 27 und Antriebsmagnete 9, welche als Linearmotore ausgebildet sind, bewirkt. Die Verfahrung kann von einem Positionspunkt auf der Aufspannplatte 2 zu einem nächsten mit einem darauf folgenden kontrollierten Absetzen der Basisplatte 7' und dessen Verspannung durch die Haltemagnete 23 unter Beibehaltung der neuen Position im Magnethaltering 8 erfolgen, dabei kann aber auch während der Abfahrung einer µm-genauen Bahnkurve die Bearbeitung von Werkstücken auf dem Spalt 16 zwischen der Basisplattenunterseite 20 und der inneren Grundfläche 18 des Magnethalteringes 8 erfolgen, ohne daß diese beiden Flächen miteinander verspannt werden müssen.

Die einzelnen Magnete sind so regelbar, daß beispielsweise die Hebemagnete 27 auf der Basis ferromagnetischer Zugkräfte einen Luftspalt 32 zwischen der Oberseite 17 des Magnethalteringes 8 und der Basisplattenoberseite 19 bilden und diesen sichern. So auch den Luftspalt, Spalt 16, zwischen der Basisplattenunterseite 20 und der Grundfläche 18 des Magnethalteringes 8.
Die gewählten Magnetanordnungen und deren Ausbildungen sichern, daß die Magnetkräfte der Haltemagnete 23 und Hebemagnete 27 in deren Arbeitspunkten, während ihrer Aktivierung, nahezu leistungslos bereitgestellt werden können. Somit kann die schwebende Spanneinrichtung 1 bzw. die Basisplatte 7' ohne zusätzliche Bewegungselemente, wie Zahnstangen, Spindeln o, ä. und mit oder ohne zusätzliche Medien wie Gas, Flüssigkeit o. ä., rotativ sowie planar verfahren und positioniert werden.

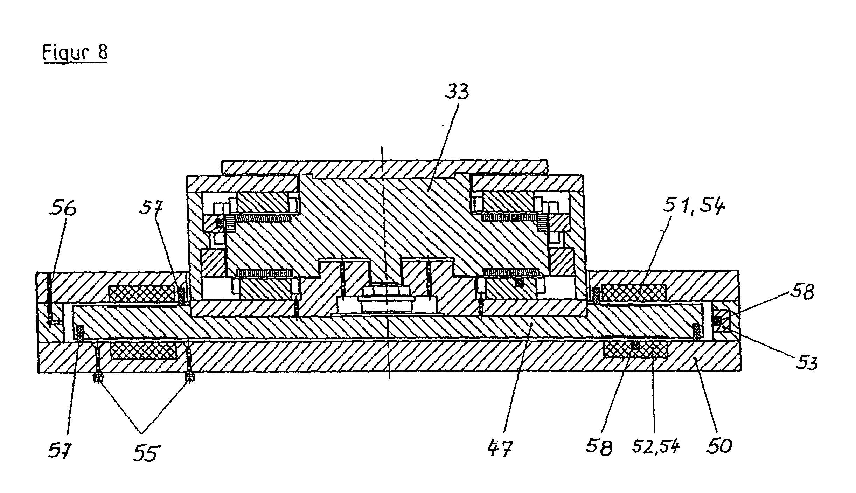

Die Figur 8 zeigt schematisch die Kombination des Rundtisches 33, wie in Figur 3 dargestellt, auf dem Rundtischträger 47 in einer mechanischen Führungsstruktur 50. Darin ist zu erkennen, daß der Rundtischträger 47 ähnlich wie der Rundtischrotor (Figur 3, Position 34) durch Hebe-, Halte- und Führungsmagnete 51; 52; 53 in der mechanischen Führungsstruktur 50 definiert von Magnetspalten umgeben gehalten und durch Antriebsmagnete 54 in der x-Richtung (Figur 1, Position 25) verfahren wird. Dabei ist es möglich, den Rundtischträger 47 mittels der Haltemagnete 52 in der mechanischen Führungsstruktur 50 definiert abzusetzen und magnetisch festzuspannen.

Gasförmige und/oder flüssige Medien können über die Kanäle 55; 56 eingebracht werden, um die Anhebung des Rundtischträgers 47 mit dem Rundtisch 33 in der mechanischen Führungsstruktur 50 zu bewirken sowie ein Gas- und/oder Flüssigkeitspolster zwischen dem Rundtischträger 47 und der mechanischen Führungsstruktur 50 aufzubauen.
Durch die Dichtungen 57 wird der Austritt des Gases und/oder der Flüssigkeit aus der mechanischen Führungsstruktur 50 soweit wie möglich vermieden.

Durch Sensoren 58 wird der Rundtischträger 47 in seiner jeweiligen Position in der mechanischen Führungsstruktur 50 definiert und in verkoppelter Funktion mit dem Rundtisch 33, wie in Figur 1 dargestellt, verfahren.

Die wesentlichen Vorteile der vorgestellten Lösung liegen in der Anordnung mehrerer Werkzeug-, Behandlungs-, Montage-/Demontagesysteme u. a. m. an einem Maschinenportal bzw. und/oder konzentrisch um die gesamte Vorrichtung zur mechanischen Bearbeitung von Werkstücken und/oder zur Montage/Demontage von Baugruppen, womit hier die Möglichkeit gegeben ist, ein Multibearbeitungszentrum mit der Erweiterung durch eine Bearbeitungs-/Montagekombination unter Einsparung einer Reihe von einzelnen Maschinen bzw. Montageplätzen zu schaffen, wobei z.B. der Rundtisch auf dem Rundtischträger berührungslos, lautlos, ohne Schmierbedarf auf einer Transferstraße mit Werkstücken auf seiner Aufspannfläche geführt wird, die hochgenauen x-, y-, z- und ϕ- Bewegungen durch diese Kombination erfolgen und nur komplementäre Bewegungen durch Peripheriemaschinen / und -montageeinheiten ausgeführt werden; ferner darin,
daß die Kombination von Werkstückbearbeitungen, Baugruppen, Behandlungen u. ä. auf einem offenen Spalt, berührungslos sowie in Kombination berührungslos/verspannt, erfolgen kann, wobei weitere Bearbeitungsmaschinen, Behandlungseinrichtungen und sonstige Maschinen sowie der Zwischentransport zu diesen entfallen; ferner in
den berührungslosen und damit verschleißfreien Bewegungsabläufen, somit Schmiermittel sowie Schmieranlagen in diesem Maschinenbereich komplett entfallen können und über die Lebenszeit der Maschine Wartungsarbeiten, Nacharbeiten usw. entfallen und die Maschinenverfügungszeiten wesentlich ansteigen; darin, daß die Bearbeitungszeiten auf Werkzeugmaschinen oder bei Montagen/Demontagen reduziert werden, da die Maschinenumrüstzeiten entfallen und aufgrund der schnellen Positionierung der Werkstücke/Baugruppen die Maschinenhauptzeiten wesentlich verkürzt werden.

Bei der Ausbildung der Basisplatte 7 als ringförmige Basisplatte 7' wird diese auch als Werkzeugträgersystem bzw. Roboterträgersystem für Montagen/Demontagen gestaltet und um die Aufspannplatte 2 bewegt, um eine entsprechend flexible Bearbeitung von Werkstücken bzw. Montage/Demontage von Baugruppen zu ermöglichen, wobei die Basisplatte 7', wie vorher beschrieben, bewegt wird.
Diese Art der Bestückung des Basisplatte 7' mit entsprechend beweglichen Werkzeug- bzw. Montage-/Demontagesystemen 21, als auch die Anordnung von festen Werkzeug- bzw. Montage-/Demontagesystemen 22 auf dem Magnethaltering 8, ist gleichfalls in der Figur 6 gezeigt.

## Patentansprüche

1. Verfahren zur mechanischen Bearbeitung von Werkstücken und Handhabung von zu montierenden/demontierenden Baugruppen, bei dem die zu bearbeitenden Werkstücke und Baugruppen auf festen oder auswechselbaren Werkstückaufspannplatten befestigt sind, wobei
die Aufspannplatten (2) als Teil einer Spanneinrichtung (1) und/oder eines Rundtisches (33) durch Magnetkräfte und/oder gasförmige und/oder flüssige Medien schwebend gelagert, verstellbar und positionierbar sind, wobei die auf der Aufspannplatte befestigten Werkstücke sowohl in schwebenden, in schwebend rotierenden, als auch in abgesenkten Positionen der Spanneinrichtung oder des Rotors des Rundtisches entsprechend bearbeitbar sind, **dadurch gekennzeichnet, dass** mittels eines Sensorsystems die Berührungsfreiheit der Tragelemente der Aufspannplatte (2) in einem Magnethaltering (8) bzw. der Tragelemente des Rotors (34) mit Aufspannplatte (2) im Rundtischgehäuse (37), die µm-genaue Positionierung der Werkstücke/Baugruppen zu den Werkzeug-, Montage-, Demontagesystemen durch ein Mess-, Regel- und Steuersystem gesichert wird und die direkte Winkeleinstellung sowie die direkte Drehzahlmessung als auch eine indirekte Beschleunigungsmessung des Rotors (34) mittels einer Winkelmesseinrichtung (39) erfolgt.

2. Verfahren nach Anspruch 1, **dadurch gekennzeichnet, dass**
bei der Bearbeitung der Werkstücke wie auch bei der Montage/Demontage von Baugruppen im schwebenden Zustand dieser Schwebezustand durch Magnetkräfte in Verbindung mit gasförmigen und/oder flüssigen Medien als auch allein durch Magnetkräfte oder gasförmige und/oder flüssige Medien erzeugt wird.

3. Verfahren nach einem der Ansprüche 1 und 2, **dadurch gekennzeichnet, dass**
die Spanneinrichtung (1) und der Rotor (34) des Rundtisches (33) mittels Magneten und/oder gasförmigen und/oder flüssigen Medien anhebbar ist, somit definierte Abstände zwischen den Tragelementen ausgebildet werden und in diesem Schwebezustand die Tragelemente und der Rotor (34) und somit die mit der Spanneinrichtung (1) und dem Rotor (34) verbundenen Aufspannplatten (2) planar und rotativ um ihre Achse verstellt und damit Werkstücke/ Baugruppen zu an Maschinenportalen (10) in Gantrybauart vorgesehenem Werkzeug und/oder Montage- oder Demontagesystem oder auch anderen positioniert werden können, wenn diese Maschinenportale (10) vorher in der Art positioniert werden, dass sie sich konzentrisch über der Spanneinrichtung (1) bzw. über dem Rundtisch (33) zur mechanischen Bearbeitung von Werkstücken und/oder zur Montage/Demontage von Baugruppen befinden.

4. Verfahren nach einem der Ansprüche 1 bis 3, **dadurch gekennzeichnet, dass**
die mechanischen Bearbeitungen, Behandlungen, Beschichtungen, Montage/Demontagen an den Werkstücken und/oder Baugruppen dabei konzentrisch, exzentrisch sowie auf Bahnkurven erfolgen können, wobei beim Einsatz eines Rundtisches (33) der Rotationsantrieb des Rotors (34) sowie die rotative Winkelposition des Rotors (34) dabei mechanisch oder auch mittels Synchronoder Asynchronlinearmotoren bewirkt werden und der rotatorische Kraftangriff sowohl in horizontaler Ebene als auch in vertikaler Ebene erfolgen kann.

5. Verfahren nach Anspruch 1 und 4, **dadurch gekennzeichnet, dass**
der rotatorische Kraftangriff in horizontaler Ebene von unten oder oben auf eine Flanschfläche oder eine abgesetzte Fläche des Rotors (34) und in vertikaler Ebene an der Mantelfläche oder Innenbohrung des Rotors (34) oder an dem äußeren Durchmesser des Rotorflansches erfolgen kann.

6. Vorrichtung zur Durchführung des Verfahrens nach Anspruch 1, die als eine Spanneinheit ausgebildet ist, aus einer Basisplatte mit zugeordnetem Tragring besteht, in dem eine Winkelverstelleinrichtung angeordnet ist, die wiederum über Anstellspindeln mit einer Zentrierplatte und einer Werkstückaufspannplatte verbunden sind, **dadurch gekennzeichnet, dass**
die Basisplatte (7, 7') als ein vollflächiger oder ringförmig gestalteter Körper ausgeführt ist, die Basisplatte (7, 7') in einem Magnethaltering (8) angeordnet ist, wobei Zwischenräume, sogenannte Freiräume, zwischen dem Magnethaltering (8) und der Basisplatte (7,7') sowohl umfänglich als auch stirnseitig vorhanden sind, die eine rotative und planare Bewegung der Spanneinheit (1) im Magnethaltering (8) ermöglichen, wobei die Freiräume Medienkammern (31) bilden, welchen Öffnungen im Magnethaltering (8) zugeordnet sind, die Öffaungen sind mit einem Düsensystem ausgerüstet, welches aus einzelnen Düsenöffnungen (11; 12) besteht, die umfänglich im Magnethaltering (8) angeordnet sind, der Magnethaltering (8) ist ferner mit einem Sensorsystem ausgerüstet, das die Berührungsfreiheit der Tragelemente der Basisplatte (7, 7') in dem Magnethaltering (8) sichert.

7. Vorrichtung nach Anspruch 6, **dadurch gekennzeichnet, dass**
im Magnethaltering (8) an seiner inneren Oberseite (17) in wechselnder Folge Hebemagnete (27) sowie Antriebsmagnete (9) und an seiner inneren Grundfläche (18) Haltemagnete (23) sowie Antriebsmagnete (9) eingeordnet und die Antriebsmagnete (9) als Linearmotore ausgebildet sind.

8. Vorrichtung nach einem der Ansprüche 6 bis 7, **dadurch gekennzeichnet, dass**
die Haltemagnete (23) und Hebemagnete (27) als Hybridmagnete ausgeführt sind.

9. Vorrichtung nach einem der Ansprüche 6 bis 8, **dadurch gekennzeichnet, dass**
der Tragring (6) mit der zugeordneten Aufspannplatte (2) an einer Maschinenbasis in einer entsprechend ausgestalteten Fundamentgrube angeordnet ist und die Aufspannplatte (2) sowie die Basisplatte (7') in einer horizontalen Ebene zueinander verstellt werden können.

10. Vorrichtung nach einem der Ansprüche 6 bis 9, **dadurch gekennzeichnet, dass**
die Basisplatte (7') auf ihrer Oberfläche mit beweglichem Werkzeug - Montage/Demontagesystemen (21) bestückt ist, mit denen die auf der Aufspannplatte (2) befestigten Werkstücke bearbeitet bzw. Baugruppen montiert/demontiert werden können und parallel dazu auf der oberen Fläche des Magnethalteringes (8) feste Werkzeug-, Montage-/Demontagesysteme (22) angeordnet sein können.

11. Vorrichtung zur Durchführung des Verfahrens nach Anspruch 1, **dadurch gekennzeichnet, dass**
in einem Rundtisch (33), bestehend aus einem Gehäuse (37), einem Rotor (34) mit fester oder auswechselbarer Aufspannplatte (2), Hebemagneten (35), Haltemagneten (38), Zentriermagneten (36), einem Linearmotor (40) sowie einer Winkelmesseinrichtung (39) und einem Sensorsystem, der Rotor (34) magnetgelagert angeordnet ist, wobei das Sensorsystem die Berührungsfreiheit des Rotors zu den jeweiligen Magneten (35, 36, 38) und dem Linearmotor (40) sichert,

12. Vorrichtung nach Anspruch 11, **dadurch gekennzeichnet, dass**
für den rotatorischen Kraftangriff der Rotor (34) mit ebenen oder abgesetzten Flanschflächen ausgebildet und im Bereich der Wirkflächen der Hebemagnete (35), der Haltemagnete (38) und der Zentriermagnete (36) vorzugsweise mit geblechten Zonen (41) ausgerüstet ist.

13. Vorrichtung nach den Ansprüchen 11 und 12, **dadurch gekennzeichnet, dass**
im Bereich der Hebemagnete (35), der Haltemagnete (38) und der Zentriermagnete (36) Sensoren (46) angeordnet und das Gehäuse (37) des Rundtisches (33) mit Düsenöffnungen (12) ausgeführt ist.

14. Vorrichtung nach einem der Ansprüche 11 bis 13, **dadurch gekennzeichnet, dass**
zur Unterstützung des Schwebezustandes vom Rotor (34) sowie der Aufspannplatte (2) gleichpolig wirkende Magnete zwischen der Unterseite des Rotors (34) und der dieser gegenüber liegenden Grundfläche im Gehäuse (37) angeordnet sein können.

15. Vorrichtung nach einem der Ansprüche 11 bis 14, **dadurch gekennzeichnet dass**
die Rundtisch-Gehäusegrundplatte (37) des Rundtisches (33) mit einer Fangeinrichtung versehen ist.

16. Vorrichtung nach einem der Ansprüche 11 bis 15, **dadurch gekennzeichnet, dass**
der Rundtisch (33) auf einem Rundtischträger (47) angeordnet ist.

17. Vorrichtung nach einem der Ansprüche 11 bis 16, **dadurch gekennzeichnet, dass**
der Rundtischträger (47) in einer mechanischen Führungsstruktur (50) geführt ist und innerhalb der Führungsstruktur (50) und/oder am Rundtischträger (47) Hebeund Antriebsmagnete (51; 54) sowie Halte- und Antriebsmagnete (52; 54) und Führungsmagnete (53) angeordnet sind.

## Claims

1. A method for the mechanical machining of workpieces and the manipulation of component groups, which are to be assembled or disassembled, whereby the workpieces to be machined and the component groups are mounted on stationary or interchangeable workpiece clamping plates, in which the clamping plates (2) are floatingly positioned as part of a tightening device (1) and/or of a circular table (33) using magnetic forces and/or gaseous and/or liquid media. They are adjustable and positionable in which the workpieces mounted to the clamping plate in a floating, floating rotating, as well as in lowered positions of the tightening device or of the circular table's rotor are accordingly machineable, wherein said that by using a sensor system the clamping plate's supporting elements (2) freedom of movement in a magnetic mounting ring (8), or rather the rotor's (34) supporting elements with clamping plate (2) in the circular table's casing (37), guarantees the µ exact positioning of the workpieces/component groups to the tooling, assembly and disassembly systems using a measuring, regulating and control system. The direct angle adjustment, the direct revolution rate, as well as the rotor's indirect acceleration measurement (34) are the result of using an angular measuring system.

2. A method according to claim 1, wherein said that during the machining of workpieces such as in the assembly/disassembly of component groups in a floating state, that this floating state is generated through magnetic forces in connection with gaseous and/or liquid media as well as only by magnetic forces or gaseous and/or liquid media.

3. A method according to one of the claims 1 and 2 wherein said that the tightening device (1) and the circular table's (33) rotor (34) is liftable using magnets and/or gaseous and/or liquid media, thereby determining defined distances between the supporting elements and that in this floating state, the support elements and the rotor (34) and thereby the clamping plates (2) connected with the tightening device (1) and the rotor, (34) are adjusted flatly and rotatively round their axis. Workpieces/component groups can thereby be positioned to machine interfaces (10) in the Gantry composition provided tool and/or in the assembly or disassembly systems or others as well should these machine interfaces (10) be priorly positioned in this way so that they are located concentrically over the tightening device (1) or over the circular table (33) for the mechanical machining of workpieces and/or for the assembly/disassembly of component groups.

4. A method according to one of the claims 1 to 3 wherein said that the mechanical machining, manipulation, coatings, assembly/disassembly at workpieces and/component groups can, meanwhile, result concentrically, eccentrically, as well as on plane curves, in which, with the inserting of a circular table (33) the rotor's (34) rotation drive, as well as the rotative angle position of the rotor (34) can, meanwhile, be achieved mechanically, or using synchronised or asynchronous linear motors and can generate the rotary force application on the horizontal level as well as on the vertical level.

5. A method according to claims 1 and 4 wherein said that the rotary force application on a horizontal level can be generated from above or below on a flange surface or a skewed rotor surface (34) and on a vertical level at the lateral surface or the inner rotor (34) borehole or on the exterior rotor flange's diameter.

6. The device for the implementation of the method according to claim 1, which is depicted as an adjusting unit, is composed of a base plate with the corresponding retaining ring in which an angular adjusting device is arranged, which in turn is connected by control spindles with a positioning plate and a workpiece clamping plate, wherein said that the base plate (7,7') is detailed as a full or ring-shaped body, that the base plate (7,7') is assigned to a magnetic mounting ring (8), in which the intermediate spaces, so-called free spaces, between the magnetic mounting ring (8) and the base plate (7,7') are present over the whole area, as well as on the front side, enabling a rotative and flat movement of the adjusting unit (1) in the magnetic mounting ring (8) in which the free spaces form media chambers (31) whose openings are assigned to the magnet mounting ring (8). The openings are equipped with a jet system which is composed of individual jet openings (11;12) which are arranged extensively in the magnetic mounting ring, (8) furthermore, the magnetic mounting ring (8) is equipped with a sensor system which guarantees the freedom of movement of the base plate's (7,7') supporting elements in the magnetic mounting ring.

7. The device according to claim 6 wherein said that the inside upper side (17) of the magnetic mounting ring (8) has an arrangement, in alternating order, of lifting magnets (27) as well as impeller magnets (9) and electro-magnets (23)on its inner base surface (18) as well impeller magnets (9) and the impeller magnets (9) are formed as linear motors.

8. The device according to one of the claims 6 to 7 wherein said that the electro-magnets (23) and lifting magnets (27) are formed as hybrid magnets.

9. The device according to one of the claims 6 to 8 wherein said that the retaining ring (6), with the assigned clamping plate (2), is assigned to a machine base in a corresponding constructed foundation base and the clamping plate (2), as well as the base plate (7'), can be adjusted to each other on a horizontal level.

10. The device according to one of the claims 6 to 9 wherein said that the base plate (7') is equipped with moveable tooling assembly/disassembly systems (21) on its surface with which the mounted workpieces on the clamping plate are machined or the component groups can be assembled/disassembled and stationary tooling, assembly/disassembly systems (22) can be assigned parallel on the upper surface of the magnetic mounting ring (8).

11. The device for the implementation of the process according to claim 1 wherein said that in a circular table (33) composed of a casing (37), a rotor (34) with a stationary or interchangeable clamping plate (2), lifting magnets (35), electro-magnets (38) positioning magnets (36) a linear motor (40) as well as an angular measuring system (39) and a sensor system, the rotor is arranged by magnetic support, guaranteeing the rotor's freedom of movement to the respective magnets (35, 36, 38) and to the linear motor (40).

12. The device according to claim 11 wherein said that for the rotative force application, the rotor (34) is formed with even or skewed flange surfaces and in the area of the lifting magnets' (35) active areas the electro-magnets (38) and the positioning magnets (36) should preferably be equipped with areas (41) of sheet metal.

13. The device according to claims 11 and 12 wherein said that in the area of the lifting magnets (35), electro-magnets (38) and positioning magnets (36) sensors (46) are assigned and that the circular table's (33) casing (37) is provided with jet openings (12).

14. The device according to one of the claims 11 to 13 wherein said that in order to support the rotor's (34) floating state, as well as the clamping plate (2), magnets, with a homopolar effect, can be assigned between the rotor's (34) underside and the base in the casing (37) positioned on the opposite.

15. The device according to one of the claims 11 to 14 wherein said that the circular table's (33) casing base plate (37) is provided with a catching device.

16. The device according to one of the claims 11 to 15 wherein said that the circular table (33) is assigned to a circular table's support (47).

17. The device according to one of the claims 11 to 16 wherein said that the circular table's support (47) is directed into a mechanical super-conducting structure (50) and that lifting and drive magnets (51; 54), as well as electro and drive magnets (52; 54) and super-conducting magnets (53) are assigned within the super-conducting structure (50) and/or to the circular table's support (47).

## Revendications

1. Procédé pour l'usinage mécanique de pièces d'usinage et la manipulation de groupes de pièces assemblées à monter et à démonter, où les pièces usinées et les groupes de pièces sont fixés sur des plateaux serrage de pièce fixes ou interchangeables, les plateaux de serrage (2) en tant que partie d'un dispositif de serrage (1) et/ou d'un plateau rotatif (33) sont logés de manière flottante par des forces magnétiques et/ou des fluides gazeux et/ou liquides, sont mobiles et positionnables, les pièces à usiner fixées sur la plaque de serrage pouvant être usinées aussi bien dans des positions flottantes, dans des positions rotatives flottantes qu'en position abaissée du dispositif de serrage ou du rotor du plateau rotatif, **caractérisé en ce**
**qu'**au moyen d'un système de capteurs, il est effectué la liberté de contact des éléments porteurs du plateau de serrage (2) dans un anneau de support aimanté (8) respectivement des éléments porteurs du rotor (34) avec le plateau de serrage (2) dans l'enveloppe (37) du plateau tournant, laquelle est fixée en position par un système de réglage, de mesure et de commande pour un positionnement au µm prés des pièces et groupes de pièces par rapport aux systèmes d'outillage, de montage et de démontage, ainsi que l'ajustement angulaire directe et la mesure directe de la vitesse de rotation ainsi qu'une mesure indirecte d'accélération du rotor (34) s'effectuent au moyen d'un dispositif de mesure angulaire (39).

2. Procédé selon la revendication 1, **caractérisé en ce que** lors de l'usinage des pièces à usiner ainsi que lors du montage/démontage de groupes de pièces à l'état flottant, cet état flottant est généré par des forces magnétiques en liaison avec des fluides gazeux et/ou liquides ainsi qu'uniquement par des forces magnétiques ou uniquement par des fluides gazeux et/ou liquides.

3. Procédé selon l'une des revendications 1 et 2, **caractérisé en ce que** le dispositif de serrage (1) et le rotor (34) du plateau rotatif (33) peuvent être soulevés au moyen d'aimants et/ou de fluides gazeux et/ou liquides, des distance définies étant ainsi formées entre les éléments porteurs et dans cet état flottant, il est possible de déplacer de manière planaire et rotative autour de leur axe les éléments porteurs et le rotor (34) et ainsi les plateaux de serrage (2) reliés au dispositif de serrage (1) et au rotor (34) et de positionner ainsi les pièces à usiner/les groupes de pièces par rapport à des outils et/ou des systèmes de montage et de démontage ou également d'autres système prévus du type de fixation Gantry sur des portiques de machines (10) si ces portiques de machines (10) ont été auparavant positionnés de telle sorte qu'ils sont placés concentriques au-dessus du dispositif de serrage (1) respectivement au-dessus du plateau rotatif (33) pour l'usinage mécanique de pièces à usiner et/ou le montage et le démontage de groupes de pièces.

4. Procédé selon l'une des revendications 1 à 3, **caractérisé en ce que** les usinages mécaniques, les traitements, les revêtements, les montages/démontages sur des pièces à usiner et/ou des groupes de pièces peuvent s'effectuer de manière concentrique, excentrique ainsi que sur orbite, lors de l'emploi d'un plateau rotatif (33), l'entraînement en rotation du rotors (34) ainsi que la positon angulaire du rotor (34) pouvant s'effectuer mécaniquement ou également au moyens de moteurs synchrones ou asynchrones et l'application de la force de rotation pouvant s'opérer aussi bien dans le plan horizontal que dans le plan vertical.

5. Procédé selon les revendications 1 et 4, **caractérisé en ce que** l'application de la force de rotation peut s'effectuer dans le plan horizontal d'en bas ou d'en haut sur une surface de bride ou une surface étagée du rotor (34) et dans le plan vertical à la surface d'enveloppe ou l'alésage interne du rotor ou sur le diamètre interne de la bride de rotor.

6. Dispositif pour la mise en oeuvre du procédé selon la revendication 1 qui est conçu comme une unité de serrage qui se compose d'un plateau de base avec un anneau porteur associé dans lequel est disposé un dispositif d'ajustement angulaire qui à son tour est relié par des broches de réglage à un plateau central et un plateau de serrage de pièces à usiner, **caractérisé en ce que**
la plaque de base (7, 7') est réalisée comme un corps de pleine surface ou de forme annulaire, la plaque de base (7, 7') est disposée dans un anneau de support magnétique (8), des espaces intercalaires, dits espaces libres étant prévus entre l'anneau magnétique de support (8) et le plateau de base (7, 7') ainsi que sur la périphérie et sur la face avant, lesquels espaces permettent un mouvement rotatif et planaire de l'unité de serrage (1) dans l'anneau magnétique de support (8), les espaces libres formant des chambres à fluides qui sont associées à des ouvertures dans l'anneau magnétique de support (8), **en ce que** les ouvertures sont équipées d'un système de buses qui se compose d'orifices individuels de buses (11, 12) qui sont disposées sur la périphérie dans l'anneau magnétique de support (8), **en ce que** l'anneau magnétique de support (8) est en outre équipé d'un système de capteurs qui assure la liberté de contact des éléments support de la plaque de base (7, 7') dans l'anneau magnétique de support( 8).

7. Dispositif selon la revendication 6, **caractérisé en ce que** dans l'anneau magnétique de support (8) sont rangés sur sa face supérieure interne (17) en alternance des aimants de levage (27) ainsi que des aimants moteurs (9) et sur sa surface de fond interne (18) des aimants de support (23) ainsi que des aimants moteurs (9) et **en ce que** les aimants moteurs (9) sont réalisés comme des moteurs linéaires.

8. Dispositif selon l'une des revendications 6 à 7, **caractérisé en ce que** les aimants support (23) et les aimants de levage (27) sont conçus comme des aimants hybrides.

9. Dispositif selon l'une des revendication 6 à 8, **caractérisé en ce que** l'anneau porteur (6) avec le plateau de serrage associé (2) est disposé sur une base de machine dans une fosse de fondation aménagée en conséquence et le plateau de serrage (2) ainsi que le plateau de base (7') peuvent être déplacés dans un plan horizontal l'un par rapport à l'autre.

10. Dispositif selon l'une des revendication 6 à 9, **caractérisé en ce que** le plateau de base (7') est équipé sur sa surface supérieure de systèmes d'outillage, de montage et de démontage mobiles (21) à l'aide desquels les pièces ou groupes de pièces fixés sur le plateau de serrage (2) peuvent être usinés, montés et/ou démontés et des systèmes fixes d'outillage (22) peuvent être disposés parallèlement sur la surface supérieure de l'anneau magnétique de support (8)

11. Dispositif pour la mise en oeuvre du procédé selon la revendication, **caractérisé en ce que** dans un plateau rotatif (33) se composant d'un logement (27), d'un rotor (34) avec un plateau de serrage fixe ou interchangeable (2), d'aimants de levage (35), d'aimants de support (38) d'aimants de centrage (36), d'un moteur linéaire (40) ainsi que d'un dispositif de mesure angulaire (39) et d'un système de capteur, **en ce que** le rotor (34) est disposé logé sur des aimants, le système de capteurs assurant la liberté de contact du rotor par rapport aux aimants respectifs (35, 36, 38) et au moteur linéaire (40).

12. Dispositif selon la revendication 11, **caractérisé en ce que** pour l'application de la force de rotation, le rotor (34) est réalisé avec des surfaces de bride planes ou étagées et dans la zone des surfaces actives des aimants de levage (35), des aimants support (38) et des aimants de centrage (36), il est équipé'de préférence de zones en tôle.

13. Dispositif selon les revendications 11 et 12, **caractérisé en ce que** des capteurs sont disposés dans la zone des aimants de levage, (35), des aimants support (38) et des aimants de centrage (36) et l'enveloppe (37) du plateau rotatif (33) présentent des orifices de buse (12).

14. Dispositif selon l'une des revendications 11 à 13, **caractérisé en ce que** pour assister l'état flottant du rotor (34) ainsi que le plateau de serrage (2), il est possible de disposer des aimants à polarisation identique entre la face inférieure du rotor (34) et la surface de base opposée à celle-ci dans l'enveloppe (37).

15. Dispositif selon l'une des revendications 11 à 14, **caractérisé en ce que** le plateau de base d'enveloppe (37) du plateau rotatif (33) est muni d'un dispositif de capture.

16. Dispositif selon l'une des revendications 11 à 15, **caractérisé en ce que** le plateau rotatif (33) est disposé sur un support de plateau rotatif (47).

17. Dispositif selon l'une des revendications 11 à 16, **caractérisé en ce que** le support de plateau rotatif (47) est guidé dans une structure mécanique de guidage, et des aimants de levage et moteur (51; 54) ainsi que des aimants de retenue et d'entraînement (52; 54) et des aimants de guidage (53) sont disposés à l'intérieur de la structure de guidage (50) et/ou du support de plateau rotatif (47).
